# EUROPÄISCHE PATENTSCHRIFT

(11) **EP 3 961 054 B1**
(45) Veröffentlichungstag und Bekanntmachung des Hinweises auf die Patenterteilung: **31.01.2024**
(21) Anmeldenummer: 21185767.7
(22) Anmeldetag: 15.07.2021
(51) Int. Cl.: F16B 37/04

(54) **HALTEELEMENT UND KRAFTFAHRZEUG-BREMSPRÜFSTAND**
HOLDING ELEMENT AND MOTOR VEHICLE BRAKE TEST STAND
ÉLÉMENT DE RETENUE ET BANDE D'ESSAI DE FREINS POUR VÉHICULES AUTOMOBILES

(30) Priorität: 26.08.2020 DE 102020210799
(43) Veröffentlichungstag der Anmeldung: 02.03.2022
(73) Patentinhaber: MAHA Maschinenbau Haldenwang GmbH & Co. KG, 87490 Haldenwang (DE)
(72) Erfinder: HASEL, Gerhard, 87763 Lautrach (DE); SCHADE, Sebastian, 86956 Schongau (DE); HERB, Stefan, 87487 Wiggensbach (DE)
(74) Vertreter: MERH-IP Matias Erny Reichl Hoffmann Patentanwälte PartG mbB

(56) Entgegenhaltungen:
- EP-A1- 2 980 551
- EP-A1- 3 117 112
- JP-U- S5 753 694
- US-B1- 7 658 579

## Beschreibung

Die Erfindung betrifft ein Halteelement zum Positionieren von Muttern an einem Träger, insbesondere eines Kraftfahrzeug-Bremsprüfstands, und einen Kraftfahrzeug-Bremsprüfstand.

Im Stand der Technik sind Bremsprüfstände bekannt, mit denen Drehmomente bzw. Bremskräfte der Bremsanlagen an den Rädern von Kraftfahrzeugen ermittelt werden. Die Räder werden dazu auf Antriebsrollen abgestellt. Bremskräfte, die auf die Antriebsrollen wirken, erzeugen ein Gegen- bzw. ein Reaktionsmoment, das ermittelt werden kann. Im Bereich der Kraftfahrzeug-Bremsprüfstande weist eine Antriebsrolle eine drehfest mit der Antriebsrolle verbundene Antriebsrollenwelle auf, die in einem Lager drehbar gelagert ist. Über die Antriebsrollenwelle kann ein Drehmoment zwischen der Antriebsrolle und der Antriebseinrichtung übertragbar sein. Ferner ist verbreitet eine Erfassungseinrichtung vorgesehen, die dazu geeignet ist, ein übertragenes Drehmoment zu erfassen.

Aus der Druckschrift EP 2 980 551 A1 ist ein Lager für eine Antriebsrollenwelle eines Kraftfahrzeug-Bremsprüfstandes bekannt, das einen Lagerbock und ein daran angeordnetes Lagerblech aufweist, die eine Aufnahme für die zu lagernde Antriebsrollenwelle bilden. Das Lagerblech ist dabei mittels Schrauben mit dem Lagerbock verbunden. Bei der Montage der Antriebswelle im Lager, das diese drehbar hält, sind häufig räumlich enge Rahmenbedingungen gegeben, die mit dem Einbauraum für den Lagerbock im Kraftfahrzeug-Bremsprüfstand zusammenhängen. Dadurch ergeben sich bei der Montage häufig Schwierigkeiten, wie einem Herunterfallen des Lagerblechs oder von Muttern der Verschraubung, bevor diese festgeschraubt sind.

Aus der EP 3 117 112 A1 ist ferner ein Halteelement zum Positionieren von Muttern an einem Träger bekannt.

Es ist daher Aufgabe der Erfindung, ein Halteelement zum Positionieren von Muttern an einem Träger, insbesondere eines Kraftfahrzeug-Bremsprüfstands, und einen Kraftfahrzeug-Bremsprüfstand zur Verfügung zu stellen, die eine Montageerleichterung bieten.

Diese Aufgabe wird erfindungsgemäß durch ein Halteelement zum Positionieren von Muttern an einem Träger nach Anspruch 1 und einen Bremsprüfstand nach Anspruch 14 gelöst. Besonders bevorzugte Ausführungsformen der Erfindung sind in den abhängigen Ansprüchen angegeben.

Ein erfindungsgemäßes Halteelement zum Positionieren von Muttern an einem Träger umfasst ein Blech, das wenigstens zwei Aussparungen zur wenigstens teilweisen Aufnahme der Muttern aufweist, wobei die Aussparungen derart ausgeführt sind, so dass sie ein Verdrehen einer in die Aussparung eingeführten eckigen, insbesondere sechseckigen, Mutter verhindern. Die Aussparungen weisen jeweils eine Einführseite auf und sind ferner derart ausgeführt, dass die Muttern von der Einführseite aus in die Aussparungen eingeführt werden können und daran gehindert sind, vollständig durch die Aussparungen hindurchzutreten. Das erfindungsgemäße Halteelement umfasst ferner einen elastischen Haltebügel, der zumindest einen ersten Umgreifabschnitt aufweist, der eingerichtet ist, im montierten Zustand des Halteelementes das Blech und den Träger an einer ersten Stelle zu umgreifen und diese gegeneinander zu verspannen.

Das erfindungsgemäße Halteelement ermöglicht es dem Monteur, die Muttern in die Aussparungen des Blechs zu legen und dieses mit dem Haltebügel am Träger anzubringen. Dadurch können die Muttern am Träger angeordnet werden, auch ohne dass sie vom Bediener festgehalten werden oder bereits mit den Schrauben verschraubt sind. Ferner können die Schrauben mit dem Blech entlang dem Träger verschoben werden, um fluchtend zu Bohrungen im Träger zum Durchführen der Schrauben gebracht zu werden. Es ergeben sich durch das erfindungsgemäße Halteelement große Vorteile, gerade wenn der Bauraum im Bereich der Muttern schlecht zugänglich ist und sie daher dort zum Verschrauben nicht ohne weiteres in Position gehalten werden können. Diese Situation tritt verbreitet im Bereich von Bremsprüfständen auf, wo ein Lagerbock von oben auf dem Träger angebracht werden soll, der Bereich unter dem Träger jedoch kaum noch für den Monteur zugänglich ist. Das Verdrehen der Muttern in den Aussparungen wird beispielsweise dadurch verhindert, dass die Muttern einen unrunden radialen Außenquerschnitt aufweisen und formschlüssig in den Aussparungen am Verdrehen gehindert werden, indem sie beim Verdrehen gegen Teile der Aussparung stoßen. Das Merkmal, dass die Muttern von der Einführseite aus in die Aussparungen eingeführt werden können und daran gehindert sind, vollständig durch die Aussparungen hindurchzutreten, ist bevorzugt dadurch realisiert, dass sich die Aussparungen ausgehend von der Einführseite so im Querschnitt verkleinern, dass die Mutter nicht durch die Aussparung hindurch passt. Ebenso können geeignete rutschhemmende Materialien oder Klebstoffe an der Aussparung vorgesehen sein, die die Mutter in der Aussparung festhalten. Ebenso kann die Aussparung magnetisch, beispielsweise durch eingelegte Magnete, ausgeführt sein und so die Muttern halten, insbesondere dann, wenn das Blech nicht aus Stahl, sondern aus Kunststoff oder Aluminium hergestellt ist.

Gemäß einer Ausführungsform sind die Aussparungen derart ausgeführt, dass sie sich von der Einführseite ausgehend so schließen, dass die Mutter daran gehindert wird, vollständig durch die Aussparung durchzutreten. Dabei können sich die Aussparungen gleichmäßig oder stufenweise schließen. Beispielsweise sind die Aussparungen gemäß einer Ausführungsform wenigstens teilweise trichterförmig ausgeführt. Ebenso können die Aussparungen gemäß einer Ausführungsform als Sacklöcher im Blech ausgeführt sein.

Gemäß einer Ausführungsform weisen die Aussparungen jeweils eine Ansenkung auf, um ein Einführen der Muttern zu erleichtern und/oder bei Muttern mit Flansch den Flansch aufzunehmen. Insbesondere wenn auf eine trichterförmige Ausbildung der Aussparung verzichtet wird, kann eine Ansenkung an der Aussparung in Verbindung mit einer Mutter, die beispielsweise oberhalb einer Sechskantaußenform einen überstehenden Flansch aufweist, die Schraube mittels des Flansches am Durchtreten durch die Aussparung hindern. Dabei kann der Flansch beispielsweise nur bis in den Bereich der Ansenkung in die Aussparung eingeführt werden, weil ein weiterer Bereich der Aussparung einen geringeren lichten Innendurchmesser aufweist als der größte Außendurchmesser des Flansches.

Gemäß einer Ausführungsform weisen die Aussparungen zumindest einen Abschnitt mit einem sechseckigen Querschnitt auf. Diese Ausgestaltung kann insbesondere bei Muttern in Form von Sechskantmuttern deren Verdrehen in der Aussparung verhindern, um die Schrauben mit den Muttern verschrauben zu können. Dabei ist der Abschnitt mit dem sechseckigen Querschnitt so bemessen, dass eine eingeführte Sechskantmutter mit entsprechendem Außenquerschnitt formschlüssig am Verdrehen gehindert ist.

Gemäß einer weiteren Ausführungsform ist auf der Seite des Blechs, der Gegenüber der Einführseite, bzw. den Einführseiten der Aussparungen, liegt, zumindest ein Vorsprung ausgebildet ist, um eine Verschiebung des Haltebügels entlang des Blechs zu blockieren. Dadurch wird der Haltebügel am Blech in Position gehalten. Beispielsweise weist der Haltebügel eine entsprechende Ausbuchtung auf, die in den Vorsprung eingreift. Beispielsweise sind am Blech zwei Vorsprünge ausgebildet und am Haltebügel zwei zugeordnete Ausbuchtungen vorgesehen, die im montierten Zustand jeweils so in einen zugeordneten Vorsprung greifen, dass eine Verschiebung des Haltebügels längs einer Verbindungslinie der Vorsprünge eingeschränkt ist.

Gemäß einer Ausführungsform ist der Vorsprung als Ausstülpung mit Material, das beim Fertigen der Aussparung weggedrückt, bzw. verdrängt, wurde, gebildet. Dabei können Aussparung und Ausstülpung in einem Arbeitsgang durch Tiefziehen des Blechs gebildet werden, wodurch die Herstellkosten des Blechs minimiert werden können.

Gemäß einer weiteren Ausführungsform weist der Haltebügel wenigstens eine Ausbuchtung auf, die im montierten Zustand so in einer Eingreifrichtung in den Vorsprung eingreift, dass eine Verschiebung des Haltebügels entlang dem Blech in eine andere als die Eingreifrichtung blockiert ist. Diese Fixierung des Haltebügels in Bezug auf das Blech hilft dabei, dass der Haltebügel sich (nur) mit dem Blech zusammen verschieben lässt. Die funktionale Zuordnung von Haltebügel und Vorsprung wird dadurch stabiler.

Gemäß einer Ausführungsform weist der Haltebügel einen zweiten Umgreifabschnitt auf, der eingerichtet ist, im montierten Zustand des Halteelementes das Blech und den Träger an einer zweiten Stelle zu umgreifen und diese gegeneinander zu verspannen, und weist der Haltebügel einen Verbindungsabschnitt auf, der die beiden Umgreifabschnitte miteinander verbindet. Dadurch können die beiden Umgreifabschnitte beispielsweise seitlich vom Lagerbock angeordnet werden und diesen zwischen sich halten. Die wenigstens eine Ausbuchtung ist beispielweise im Verbindungsabschnitt gebildet.

Gemäß einer Ausführungsform weist der Haltebügel im montierten Zustand beidseitig außerhalb eines Bereiches, in dem die Aussparungen vorgesehen sind, von der Einführseite weg ragende zweite Ausbuchtungen auf, die ein dazwischen angeordnetes zweites Bauteil, insbesondere einen Lagerbock, seitlich so einfassen, dass bei einer seitlichen Verschiebung des Bauteils der Haltebügel mitverschoben wird. Wird der Lagerbock entlang einer Verbindungslinie der beiden Schrauben verschoben, nimmt er das Halteelement mit den darin in den Aussparungen angeordneten Muttern mit und hält diese in Position. Dadurch können die Schrauben auch dann in die Muttern geschraubt werden, wenn der Bauraum, indem sich diese befinden, unzugänglich ist, und sie daher nicht vom Bediener in Position gehalten werden können. Dadurch wird die Montage des Bremsprüfstands vereinfacht.

Gemäß einer weiteren Ausführungsform ist am Blech auf der Seite, auf der die Vorsprünge ausgebildet sind, ein Rast-Vorsprung, insbesondere ein nasenförmiger Vorsprung, angeordnet, in den der Haltebügel so eingreifen kann, dass er den Rast-Vorsprung hintergreift, und dabei mit zwei Anlageabschnitten an einer Seitenwand des Blechs so zum Anliegen bringbar ist, dass er zwischen dem Rast-Vorsprung und der Seitenwand verspannt ist, oder ist am Blech auf der Seite, auf der die Vorsprünge ausgebildet sind, ein Rast-Vorsprung, insbesondere ein nasenförmiger Vorsprung, angeordnet, in den der Haltebügel so eingreifen kann, dass er den Rast-Vorsprung hintergreift, und dabei an den Vorsprüngen anliegt, so dass er zwischen dem Rast-Vorsprung und den Vorsprüngen verspannt ist. Der Rastvorsprung ist bevorzugt eingerichtet, im montierten Zustand des Haltebügels gegen den Verbindungsabschnitt zu drücken. Durch das Verspannen des Haltebügels am Rast-Vorsprung wird der Haltebügel kraftschlüssig in Position gehalten. Der Rast-Vorsprung kann auch clipartig ausgeführt sein, so dass der Haltebügel, beispielsweise mit seinem Verbindungsabschnitt, in den Rast-Vorsprung eingeklemmt wird, um vom Rast-Vorsprung gehalten zu werden.

Ein erfindungsgemäßer Bremsprüfstand umfasst wenigstens einen Träger und zumindest einen an dem Träger angeordneten Lagerbock zum drehbaren Halten einer Welle einer Rolle des Bremsprüfstandes, und ferner mehrere Schrauben und zugehörige Muttern mittels denen der Lagerbock an dem Träger befestigt ist. Ferner umfasst der erfindungsgemäße Bremsprüfstand wenigstens ein Halteelement, wie es vorhergehend beschrieben ist. Der Aufbau des Bremsprüfstands ist entsprechend den hier im Hinblick auf das Halteelement gemachten Ausführungen.
- **Fig. 1**: zeigt vier Rollen eines Bremsprüfstands mit jeweils zwei erfindungsgemäßen Halteelementen und eine Ausschnittvergößerung im Bereich eines der Halteelemente gemäß einer ersten Ausführungsform in einer schematischen Draufsicht;
- **Fig. 2**: zeigt das erfindungsgemäße Halteelement gemäß der Ausführungsform von Fig. 1 montiert an einem Lagerbock in einer schematischen perspektivischen Ansicht von schräg unten;
- **Fig. 3**: zeigt das erfindungsgemäße Halteelement gemäß der Ausführungsform von Fig. 1 montiert an einem Lagerbock in einer schematischen perspektivischen Ansicht von schräg oben;
- **Fig. 4**: zeigt das erfindungsgemäße Halteelement gemäß der Ausführungsform von Fig. 1 zusammen mit einem Lagerbock in einer Explosionsdarstellung; und
- **Fig. 5**: zeigt das erfindungsgemäße Halteelement gemäß einer zweiten Ausführungsform montiert an einem Lagerbock in einer schematischen perspektivischen Ansicht von schräg oben.

Bevorzugte Ausführungsformen der Erfindung werden nachfolgend ausführlich unter Bezugnahme auf die begleitenden Zeichnungen beschrieben. In den Figuren werden für gleiche oder entsprechende Komponenten die gleichen Bezugszeichen verwendet, sofern nicht anders angegeben.

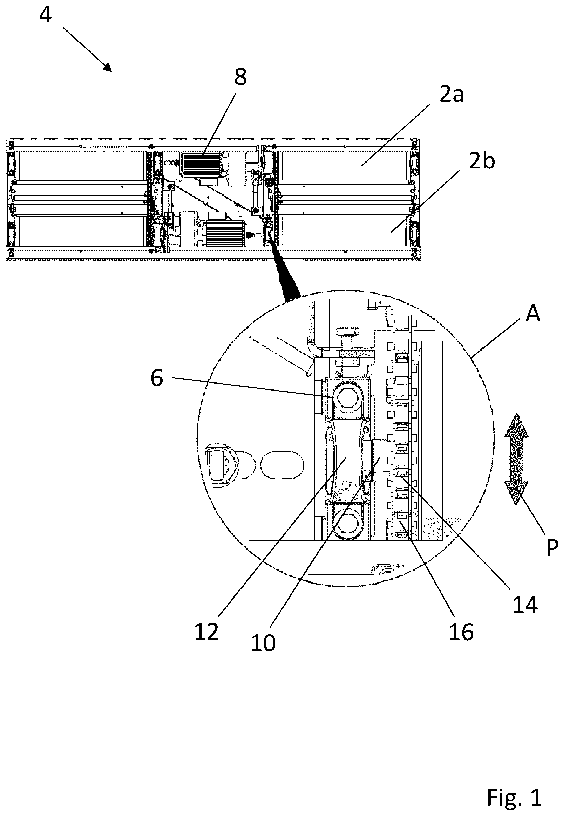

Fig. 1 zeigt vier Rollen 2a, 2b eines Bremsprüfstands 4 mit jeweils zwei erfindungsgemäßen Halteelementen 6 und eine Ausschnittvergößerung A im Bereich eines der Halteelemente 6 gemäß einer ersten Ausführungsform in einer schematischen Draufsicht. Die Auschnittvergrößerung A ist mit einem Kreis umrandet und ein Pfeil deutet auf die vergrößerte Stelle des Bremsprüfstands 4.

Der Bremsprüfstand 4 weist bei diesem Ausführungsbeispiel zwei nebeneinander angeordnete Paare von je zwei parallel zueinander angeordneten Rollen 2a, 2b zum darauf Anordnen von zu prüfenden Rädern eines Kraftfahrzeugs auf. Zwischen den Paaren von Rollen 2a, 2b sind Motoren 8 dargestellt, die zum Antrieb der Rollen 2a, 2b dienen. Weitere Komponenten des Bremsprüfstands 4, wie beispielsweise eine Steuerung, Bremsvorrichtungen und dergleichen, sind nicht dargestellt.

Die Rollen 2a, 2b laufen jeweils beidseitig in Wellen 10 aus, was gut in der Ausschnittvergrößerung A für das im Bild linke Ende der Rolle 2b zu erkennen ist. Die Wellen 10 dienen der rotatorischen Lagerung der Rollen 2a, 2b. Für die Lagerung der Wellen 10 sind jeweils Lagerböcke 12 vorgesehen, in denen die Wellen drehbar gelagert sind. Gemäß diesem Ausführungsbeispiel sind an den Rollen 2a, 2b jeweils ein Zahnrad 14 drehfest angebracht, dass dem Antrieb oder dem Abbremsen der Rollen 2a, 2b dient. Eine Kette 16 greift zum Antreiben und Bremsen in das Zahnrad 14 ein und kann über ein Ritzel durch einen der Motoren 8 angetrieben werden. Die Rolle 2a hat bevorzugt eine größere Hohlwelle 10, damit der Motor 8 in dieser befestigt werden kann.

Mit einem Doppelpfeil P ist angedeutet, dass jeweils eine der Rollen 2a, 2b oder beide verlagert werden können, wodurch der Achsabstand zwischen den Rollen 2a, 2b vergrößert oder verringert werden kann. Dazu können die Lagerböcke 12 bei der Montage in der Pfeilrichtung P verschoben und dann befestigt werden. Dies wird durch die Halteelemente 6 an den Lagerböcken 12 erleichtert. Die Halteelemente 6 werden anhand der nachfolgenden Figuren im Detail beschrieben. Hier in Fig. 1 liegt das Halteelement 6 in der Ausschnittvergrößerung A weitgehend in der Bildebene unterhalb des Lagerbocks 12, so dass es kaum zu erkennen ist. Durch die Möglichkeit der Verschiebung des Lagerbocks 12 bei dessen Montage kann die Kette 16 im gewünschten Zustand gespannt werden, bevor der Lagerbock 12 fixiert wird. Die vorliegende Erfindung ermöglicht eine Verschraubung des Lagerbocks 12 am Bremsprüfstand 4 auch wenn der Einbauraum unterhalb des Lagerbocks 12 räumlich für den Bediener schlecht zugänglich ist.

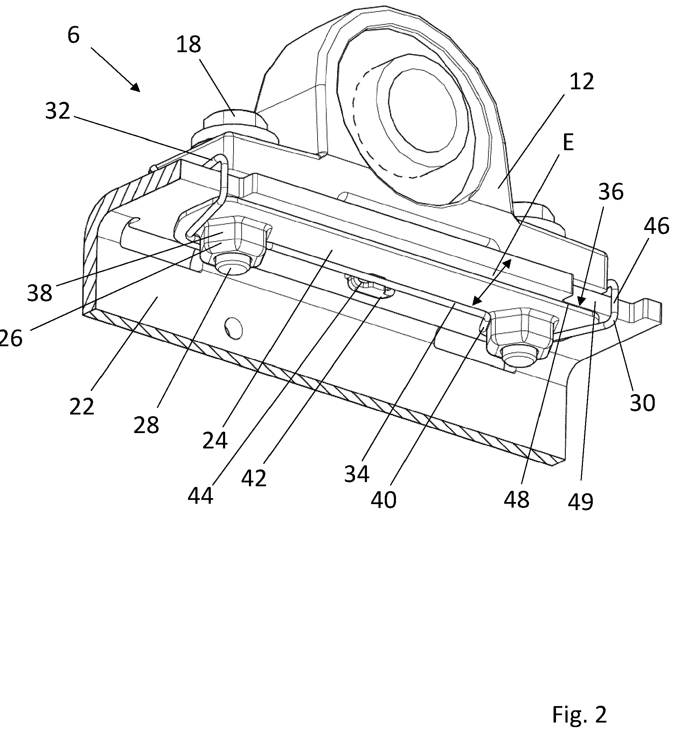

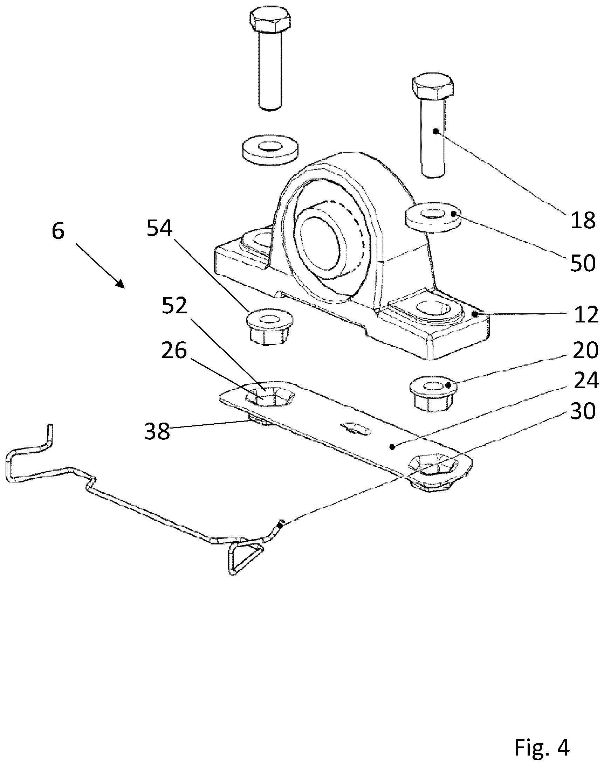

Fig. 2 zeigt das erfindungsgemäße Halteelement 6 gemäß der Ausführungsform von Fig. 1 montiert an einem Lagerbock 12 in einer schematischen perspektivischen Ansicht von schräg unten. Der Lagerbock 12 ist mittels zweier Schrauben 18 und diesen zugeordneter Muttern 20 (in Fig. 2 verdeckt, in Fig. 4 gezeigt) an einem Träger 22 des Bremsprüfstands 4 befestigt. Das Halteelement 6 weist ein Blech 24 auf, das im Bild unterhalb des Lagerbocks 12 dargestellt ist. Der Träger 22 verläuft somit zwischen dem Lagerbock 12 und dem Blech 24. Das Blech 24 weist zwei Aussparungen 26 zur wenigstens teilweisen Aufnahme der Muttern 20 auf. Die Ausbildung der Aussparungen 26 wird anhand von Fig. 4 weiter unten im Detail beschrieben. Bei diesem Ausführungsbeispiel sind die Aussparungen 26 durch Tiefziehen eines Teils des Blechs 24 gebildet. Die Aussparungen 26 sind derart ausgeführt, dass sie ein Verdrehen einer in die Aussparung 26 eingeführten eckigen, insbesondere sechseckigen, Mutter 20 verhindern. Gemäß diesem Ausführungsbeispiel weisen die Aussparungen eine sechseckige Form auf, so dass eine als Sechskantmutter ausgeführte, wenigstens teilweise darin aufgenommene Mutter 20 in der passenden Größe, formschlüssig gegen ein Verdrehen gesichert werden kann. Bei diesem Ausführungsbeispiel ragt ein Endabschnitt 28 der Schraube 18 aus der Aussparung 26 heraus, im Bild nach unten. Die Mutter 20 wird somit in der Aussparung 26 gehalten, während die Schraube 18 hindurchragen kann. Die Aussparung 26 kann ebenso im Bild nach unten geschlossen sein, also die Form eines Sacklochs aufweisen.

Das Halteelement 6 weist ferner einen elastischen Haltebügel 30 auf, der zumindest einen ersten Umgreifabschnitt 32 aufweist, der eingerichtet ist, im montierten Zustand des Halteelementes 6 das Blech 24 und das Bauteil, hier den Träger 22, an einer ersten Stelle zu umgreifen und diese gegeneinander zu verspannen. Der Haltebügel 30 ist bei diesem Ausführungsbeispiel aus rostfreiem Stahldraht gebildet. Er kann auch aus Stahldraht, beispielsweise verzinktem Stahldraht oder Kunststoff gebildet sein. Der Haltebügel 30 gemäß diesem Ausführungsbeispiel weist zwei solche Umgreifabschnitte 32 auf. Diese Umgreifabschnitte 32 verlaufen im montierten Zustand des Haltebügels 30 jeweils so, dass sie den Träger 22 und das Blech 24 umklammern und so beide zusammenhalten. Dadurch wird verhindert, dass das Blech 24 mit den Aussparungen 26 nach unten fällt. Der Haltebügel 30 trägt somit bei diesem Ausführungsbeispiel das Blech 24 und wird vom Träger 22 getragen, indem er sich an dessen Oberseite (bei im betriebsbereiten Zustand aufgestellten Bremsprüfstand 4) abstützt.

Der Haltebügel 30 weist ferner einen Verbindungsabschnitt 34 auf, der die beiden Umgreifabschnitte 32 miteinander verbindet. Der Verbindungsabschnitt 34 verläuft bei diesem Ausführungsbeispiel am Blech 24 auf dessen einer gemeinsamen Einführseite 36 für die Muttern in die Aussparungen 26 gegenüberliegenden Seite.

Auf der Seite des Blechs 24, der Gegenüber der Einführseite 36 liegt, sind bei diesem Ausführungsbeispiel zwei Vorsprünge 38 ausgebildet, um eine Verschiebung des Haltebügels 30 entlang dem Blech 24 zu blockieren. Die Vorsprünge 38 sind bei diesem Ausführungsbeispiel als Ausstülpung mit Material, das beim Fertigen der Aussparung 26 weggedrückt wurde, gebildet. Die Aussparungen 26 sind dabei beispielsweise durch Tiefziehen hergestellt, wobei Aussparungen 26 und Vorsprünge 38 in einem Arbeitsschritt am Blech 24 hergestellt werden können.

Der Haltebügel 30 gemäß diesem Ausführungsbeispiel weist zwei Ausbuchtungen 40 auf, die im montierten Zustand jeweils so in einen zugeordneten Vorsprung 38 greifen, dass eine Verschiebung des Haltebügels 30 längs einer Verbindungslinie der Vorsprünge 40 nicht möglich ist, ohne den Haltebügel 30 quer zur Verbindungslinie der Vorsprünge 38 zu bewegen. Dabei ist durch einen Doppelpfeil E eine Eingreifrichtung angezeigt, in der die Ausbuchtung 40 am Vorsprung in eine Endlage geschoben wird. Eine Verschiebung des Haltebügels 30 entlang dem Blech 24 in eine andere als die Eingreifrichtung E wird so blockiert. Im Beispiel des Bildes ist gut zu erkennen, wie beide Vorsprünge 38 durch die beiden Ausbuchtungen 40 im Haltebügel 30 etwa auf ihrem halben Umfang im hinteren Teil umschlungen sind. Es ergibt sich somit eine symmetrische Reihenfolge der Abschnitte des Haltebügels 30, mit mittigem Verbindungsabschnitt 34, gefolgt beidseitig von den Ausbuchtungen 40, die dann jeweils in die Umgreifabschnitte 32 übergehen.

Am Blech 24 ist ferner gemäß diesem Ausführungsbeispiel auf der Seite der Vorsprünge 38, also hier an dessen gegenüber der Einführseite 36 liegenden Seite, ein Rast-Vorsprung 42 angeordnet, in den der Haltebügel 30 mit seinem Verbindungsabschnitt 34 so eingreifen kann, dass er den Rast-Vorsprung 42 hintergreift, und dabei an den Vorsprüngen 38 anliegt, so dass er zwischen dem Rast-Vorsprung 42 und den Vorsprüngen 38 verspannt ist. Gemäß diesem Ausführungsbeispiel weist der Rast-Vorsprung 42 eine Rille 44 zum teilweisen Aufnehmen des an dem Rast-Vorsprung 42 anliegenden Haltebügels 30 auf, die parallel zum Blech 24 verläuft. Diese Rille 44 hält den Verbindungsabschnitt 34 des Haltebügels 30 in einem gewünschten Abstand zum Blech 24. Ebenso kann am Haltebügel 30 an dessen gegenüber der Einführseite 36 liegenden Seite der Rast-Vorsprung 42 so angeordnet sein, dass er den Rast-Vorsprung 42 hintergreift, und gleichzeitig mit zwei Anlageabschnitten 46 an einer Seitenwand 48 des Blechs 24 so zum Anliegen bringbar ist, dass er zwischen dem Rast-Vorsprung 42 und der Seitenwand 48 verspannt ist. Möglich ist bevorzugt auch, dass die Anlageabschnitte 44 an einer Seitenwand 49 des Trägers zum Anliegen kommen.

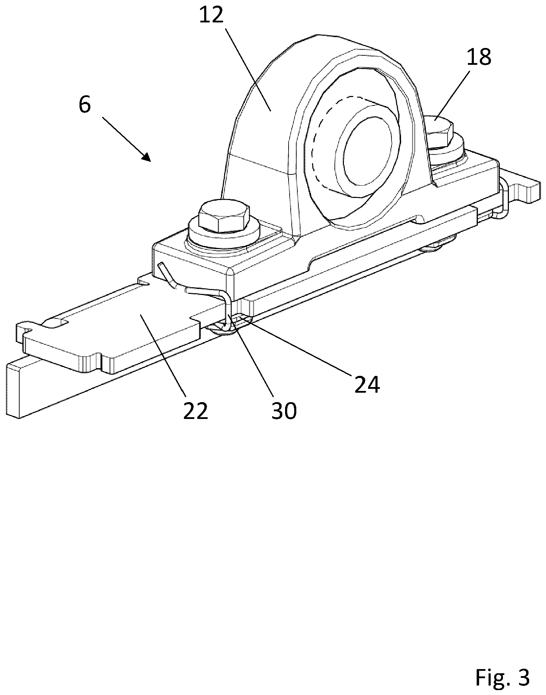

Fig. 3 zeigt das erfindungsgemäße Halteelement 6 gemäß der Ausführungsform von Fig. 1 montiert an einem Lagerbock 12 in einer schematischen perspektivischen Ansicht von schräg oben. Die in dieser Darstellung erkennbaren Elemente wurden schon mit Bezug auf Fig. 2 beschrieben. Der Lagerbock 12 ist auf dem Träger 22 angeordnet. Mittels Schrauben 18, die durch Lagerbock 12 und Träger 22 verlaufen sind beide aneinander befestigt. Das Blech 24 wird durch den Haltebügel 30 unterhalb des Trägers 22 am Träger 22 gehalten. Dabei stützt sich der Haltebügel 30 auf dem Träger 22 ab.

Fig. 4 zeigt das erfindungsgemäße Halteelement 6 gemäß der Ausführungsform von Fig. 1 zusammen mit einem Lagerbock 12 in einer Explosionsdarstellung. In dieser Darstellung sind besonders die Einzelkomponenten sehr gut erkennbar. Der Träger 22 ist in Fig. 4 nicht dargestellt. Es sind wieder die Schrauben 18 zum Befestigen des Lagerbocks 12 am Träger 22 erkennbar. Zwischen den Schrauben 18 und dem Lagerbock 12 sind jeweils Unterlegschreiben 50 vorgesehen. Die Muttern 20, in die die Schrauben 18 eingreifen, sind unterhalb des Lagerbocks 12 dargestellt. In dieser Darstellung ist besonders gut die Ausgestaltung des Blechs 24 gemäß diesem Ausführungsbeispiel erkennbar. Im Bild nach oben geöffnet sind im Blech 24 die Aussparungen 26 zur Aufnahme der Muttern 20 zu sehen. Die Aussparungen 26 weisen bei diesem Ausführungsbeispiel je eine Ansenkung 52 auf, die das Einführen der Mutter 20 erleichtert und eine Auflage für einen an der Mutter vorgesehenen Flansch 54 bietet. Die Mutter 20 wird durch die Form der Aussparung 26 daran gehindert, vollständig durch die Aussparung 26 hindurchzutreten. Die Mutter 20 wird damit im Blech 24 gehalten. Weiter links unten im Bild ist wieder der Haltebügel 30 erkennbar, der schon anhand der vorhergehenden Figuren beschrieben wurde.

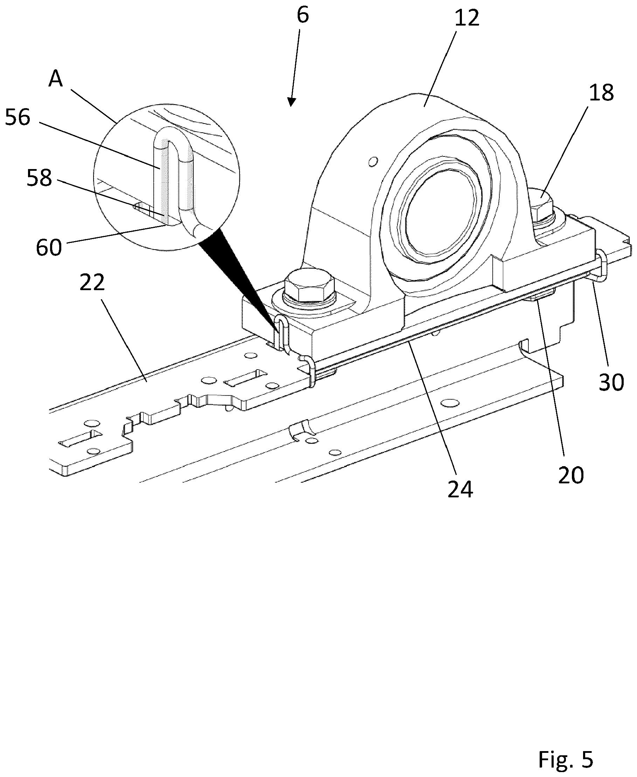

Fig. 5 zeigt das erfindungsgemäße Halteelement 6 gemäß einer zweiten Ausführungsform montiert an einem Lagerbock 12 in einer schematischen perspektivischen Ansicht von schräg oben. Die Darstellung ist entsprechend der von Fig. 2. Die Komponenten entsprechen sich weitgehend; nachfolgend wird daher im Wesentlichen auf die Unterschiede zum ersten Ausführungsbeispiel eingegangen. Wie bereits beschrieben, ist der Lagerbock 12 an dem Träger 22 mittels Schrauben 18 und zugeordneter Muttern 20 unter Zuhilfenahme des Haltelementes 6 befestigt. Der Haltebügel 30 des Halteelements 6 weist gemäß dem zweiten Ausführungsbeispiel von der Seite des Blechs 24, die die Vorsprünge 38 aufweist, weg ragende zweite Ausbuchtungen 56 auf, die im montierten Zustand des Haltebügels 30 beidseitig außerhalb eines Bereiches, in dem die Aussparungen 26 vorgesehen sind, den Lagerbock 12 seitlich so einfassen, dass bei einer seitlichen Verschiebung des Lagerbocks 12 der Haltebügel 30 mitverschoben wird. Dies ist gut in der Ausschnittvergrößerung A von Fig. 5 erkennbar. Wird der Lagerbock 12 somit entlang einer Verbindungslinie der beiden Schrauben 18 verschoben, nimmt er das Halteelement 6 mit den darin in den Aussparungen angeordneten Muttern 20 mit und hält diese in Position. Dadurch können die Schrauben 18 auch dann in die Muttern 20 geschraubt werden, wenn der Bauraum, indem sich diese befinden unzugänglich ist, und sie daher nicht vom Bediener in Position gehalten werden können. Dadurch wird die Montage des Bremsprüfstands 4 vereinfacht. Bei diesem Ausführungsbeispiel weist der Haltebügel 30 Endabschnitte 58 auf, die ausgehend von den zweiten Ausbuchtungen 56 jeweils in eine Ausnehmung 60 im Träger 22 hineinragen. Dadurch wird verhindert, dass sich der Haltebügel 30 und damit der Lagerbock 12, entlang dem Träger 22 verschieben kann, auch wenn keine Schrauben 18 durch Lagerbock 12 und Träger 22 verlaufen, also beispielsweise noch nicht eingeführt sind.

Die vorstehenden Ausführungsbeispiele der vorliegenden Erfindung wurden anhand beispielhafter Figuren detailliert beschrieben. Die Merkmale der Ausführungsbeispiele sind im Ganzen oder teilweise kombinierbar und die vorliegende Erfindung ist nicht auf die beschriebenen Ausführungsbeispiele beschränkt.

### Bezugszeichenliste

- 2a, 2b: Rolle
- 4: Bremsprüfstand
- 6: Halteelement
- 8: Motor
- 10: Welle
- 12: Lagerbock
- 14: Zahnrad
- 16: Kette
- 18: Schraube
- 20: Mutter
- 22: Träger
- 24: Blech
- 26: Aussparung
- 28: Endabschnitt
- 30: Haltebügel
- 32: Umgreifabschnitt
- 34: Verbindungsabschnitt
- 36: Einführseite
- 38: Vorsprung
- 40: Ausbuchtung
- 42: Rast-Vorsprung
- 44: Rille
- 46: Anlageabschnitt
- 48: Seitenwand
- 49: Seitenwand des Trägers
- 50: Unterlegscheibe
- 52: Ansenkung
- 54: Flansch
- 56: Zweite Ausbuchtungen
- 58: Endabschnitt
- 60: Ausnehmung
- A: Ausschnittvergrößerung
- E: Eingreifrichtung
- P: Doppelpfeil

## Patentansprüche

1. Halteelement (6) zum Positionieren von Muttern (20) an einem Träger (22), mit einem Blech (24), das wenigstens zwei Aussparungen (26) zur wenigstens teilweisen Aufnahme der Muttern (20) aufweist,
wobei die Aussparungen (26) derart ausgeführt sind, so dass sie ein Verdrehen einer in die Aussparung eingeführten eckigen, insbesondere sechseckigen, Mutter (20) verhindern,
wobei die Aussparungen (26) jeweils eine Einführseite (36) aufweisen und ferner derart ausgeführt sind, dass die Muttern (20) von der Einführseite (36) aus in die Aussparungen (26) eingeführt werden können und daran gehindert sind vollständig durch die Aussparungen (26) hindurchzutreten;
**gekennzeichnet dadurch, dass** das Halteelement (6) ferner einen elastischen Haltebügel (30) aufweist, der zumindest einen ersten Umgreifabschnitt (32) aufweist, der eingerichtet ist, im montierten Zustand des Halteelementes (6) das Blech (24) und den Träger (22) an einer ersten Stelle zu umgreifen und diese gegeneinander zu verspannen.

2. Halteelement (6) nach Anspruch 1,
wobei die Aussparungen (26) derart ausgeführt sind, dass sie sich von der Einführseite (36) ausgehend so schließen, dass die Mutter (20) daran gehindert wird, vollständig durch die Aussparung (26) durchzutreten.

3. Halteelement (6) nach Anspruch 1 oder 2,
wobei die Aussparungen (26) wenigstens teilweise trichterförmig ausgeführt sind.

4. Halteelement (6) nach einem der vorhergehenden Ansprüche,
wobei die Aussparungen (26) jeweils eine Ansenkung (52) aufweisen, um ein Einführen der Muttern (20) zu erleichtern und/oder bei Muttern (20) mit Flansch (54) den Flansch (54) aufzunehmen.

5. Halteelement (6) nach einem der vorhergehenden Ansprüche,
wobei die Aussparungen (26) als Sacklöcher im Blech (24) ausgeführt sind.

6. Halteelement (6) nach einem der vorhergehenden Ansprüche,
wobei die Aussparungen (26) zumindest einen Abschnitt mit einem sechseckigen Querschnitt aufweisen.

7. Halteelement (6) nach einem der vorhergehenden Ansprüche,
wobei auf der Seite des Blechs (24), der Gegenüber der Einführseite (36) liegt, zumindest ein Vorsprung (38) ausgebildet ist, um eine Verschiebung des Haltebügels (30) entlang des Blechs (24) zu blockieren.

8. Halteelement (6) nach Anspruch 7,
wobei der Vorsprung (38) als Ausstülpung mit Material, das beim Fertigen der Aussparung (26) weggedrückt wurde, gebildet ist.

9. Halteelement (6) nach Anspruch 7 oder 8,
wobei der Haltebügel (30) wenigstens eine Ausbuchtung (40) aufweist, die im montierten Zustand so in einer Eingreifrichtung (E) in den Vorsprung (38) eingreift, dass eine Verschiebung des Haltebügels (30) entlang dem Blech (24) in eine andere als die Eingreifrichtung (E) blockiert ist.

10. Halteelement (6) nach einem der vorhergehenden Ansprüche,
wobei der Haltebügel (30) einen zweiten Umgreifabschnitt (32) aufweist, der eingerichtet ist, im montierten Zustand des Halteelementes (6) das Blech (24) und den Träger (22) an einer zweiten Stelle zu umgreifen und diese gegeneinander zu verspannen, und
wobei der Haltebügel (30) einen Verbindungsabschnitt (34) aufweist, der die beiden Umgreifabschnitte (32) miteinander verbindet.

11. Halteelement (6) nach Anspruch 10,
wobei die wenigstens eine Ausbuchtung (40) im Verbindungsabschnitt (34) gebildet ist.

12. Halteelement (6) nach einem der vorhergehenden Ansprüche,
wobei der Haltebügel (30) im montierten Zustand beidseitig außerhalb eines Bereiches, in dem die Aussparungen (26) vorgesehen sind, von der Einführseite (36) weg ragende zweite Ausbuchtungen (40) aufweist, die ein dazwischen angeordnetes zweites Bauteil (12), insbesondere einen Lagerbock, seitlich so einfassen, dass bei einer seitlichen Verschiebung des Bauteils (12) der Haltebügel (30) mitverschoben wird.

13. Halteelement nach einem der vorhergehenden Ansprüche,
wobei am Blech (24) auf der Seite, auf der die Vorsprünge (38) ausgebildet sind, ein Rast-Vorsprung (42), insbesondere ein nasenförmiger Vorsprung, angeordnet ist, in den der Haltebügel (30) so eingreifen kann, dass er den Rast-Vorsprung (42) hintergreift, und dabei mit zwei Anlageabschnitten (46) an einer Seitenwand (48) des Blechs (24) so zum Anliegen bringbar ist, dass er zwischen dem Rast-Vorsprung (42) und der Seitenwand (48) verspannt ist, oder
am Blech (24) auf der Seite, auf der die Vorsprünge (38) ausgebildet sind, ein Rast-Vorsprung (42), insbesondere ein nasenförmiger Vorsprung, angeordnet ist, in den der Haltebügel (30) so eingreifen kann, dass er den Rast-Vorsprung (42) hintergreift, und dabei an den Vorsprüngen (38) anliegt, so dass er zwischen dem Rast-Vorsprung (42) und den Vorsprüngen (38) verspannt ist.

14. Bremsprüfstand (4) mit
wenigstens einem Träger (22) und zumindest einem an dem Träger (22) angeordneten Lagerbock (12) zum drehbaren Halten einer Welle (10) einer Rolle (2a, 2b) des Bremsprüfstandes (4), und mit
mehreren Schrauben (18) und zugehörigen Muttern (20) mittels denen der Lagerbock (12) an dem Träger (22) befestigt ist, und mit
wenigstens einem Halteelement (6) nach einem der vorhergehenden Ansprüche.

## Claims

1. Holding element (6) for positioning nuts (20) on a support (22), with a metal sheet (24) which has at least two recesses (26) for at least partially receiving the nuts (20), wherein
the recesses (26) being configured so as to prevent twisting of an angular, in particular hexagonal, nut (20) which is inserted into the recess, wherein
the recesses (26) each have an insertion side (36) and are further configured such that the nuts (20) are insertable into the recesses (26) from the insertion side (36) and are prevented from passing completely through the recesses (26);
**characterized in that**:
the holding element (6) further comprises a resilient retaining bracket (30) having at least a first embracing portion (32) which, in the assembled state of the holding element (6), is arranged to embrace the metal sheet (24) and the support (22) at a first location and to brace them against one another.

2. Holding element (6) according to claim 1, wherein
the recesses (26) are configured to close from the insertion side (36) such that the nut (20) is prevented from passing completely through the recess (26).

3. Holding element (6) according to claim 1 or 2, wherein
the recesses (26) are at least partially funnel-shaped.

4. Holding element (6) according to one of the preceding claims, wherein
the recesses (26) each have a depression (52) to facilitate insertion of the nuts (20) and/or, in the case of nuts (20) with a flange (54), to receive the flange (54).

5. Holding element (6) according to one of the preceding claims, wherein
the recesses (26) are designed as blind holes in the metal sheet (24).

6. Holding element (6) according to one of the preceding claims, wherein
the recesses (26) have at least one section with a hexagonal cross-section.

7. Holding element (6) according to one of the preceding claims, wherein
at least one projection (38) is formed on the side of the metal sheet (24) opposite to the insertion side (36) to block displacement of the retaining bracket (30) along the metal sheet (24).

8. Holding element (6) according to claim 7, wherein
the projection (38) is formed as a protrusion with material that was displaced during the fabrication of the recess (26).

9. Holding element (6) according to claim 7 or 8, wherein
the retaining bracket (30) has at least one bulge (40) which, in the assembled state, engages in the projection (38) in an engagement direction (E) in such a way that displacement of the retaining bracket (30) along the metal sheet (24) in a direction other than the engagement direction (E) is blocked.

10. Holding element (6) according to any one of the preceding claims, wherein
the retaining bracket (30) has a second embracing portion (32) which is arranged, in the assembled state of the holding element (6), to embrace the metal sheet (24) and the support (22) at a second location and to brace them against one another, and wherein
the retaining bracket (30) has a connecting section (34) which connects the two embracing portions (32) to one another.

11. Holding element (6) according to claim 10, wherein
the at least one bulge (40) is formed in the connecting portion (34).

12. Holding element (6) according to any one of the preceding claims, wherein
the retaining bracket (30), in the assembled state, has on both sides, outside a region in which the recesses (26) are provided, second bulges (40) which project away from the insertion side (36) and laterally enclose a second component (12) arranged therebetween, in particular a bearing block, in such a way that, in the event of a lateral displacement of the component (12), the retaining bracket (30) is also displaced.

13. Holding element according to one of the preceding claims, wherein
a latching projection (42), in particular a nose-shaped projection, is arranged on the sheet metal (24) on the side on which the projections (38) are formed, in which the retaining bracket (30) is engageable in such a way that it engages behind the latching projection (42) and thereby is adapted to be brought into abutment with two abutment portions (46) on a side wall (48) of the sheet metal (24) in such a way that it is braced between the latching projection (42) and the side wall (48), or
a latching projection (42), in particular a nose-shaped projection, is arranged on the metal sheet (24) on the side on which the projections (38) are formed, in which the retaining bracket (30) is engageable in such a way that it engages behind the latching projection (42) and, thereby bears against the projections (38), so that it is braced between the latching projection (42) and the projections (38).

14. Brake test stand (4) with at least one support (22) and at least one bearing block (12) arranged on the support (22) for rotatably holding a shaft (10) of a roller (2a, 2b) of the brake tester (4), and with a plurality of screws (18) and associated nuts (20) by means of which the bearing block (12) is fastened to the support (22), and with at least one holding element (6) according to any one of the preceding claims.

## Revendications

1. Élément de retenue (6) destiné à positionner des écrous (20) sur un support (22), comprenant une tôle (24) qui présente au moins deux évidements (26) pour une réception au moins partielle des écrous (20), dans lequel les évidements (26) sont réalisés de manière à empêcher un écrou (20) polygonal, en particulier hexagonal, introduit dans l'évidement de tourner,
dans lequel les évidements (26) présentent chacun un côté d'introduction (36) et sont en outre réalisés de telle sorte les écrous (20) doivent être introduits dans les évidements (26) depuis le côté d'introduction (36) et sont empêchés de passer entièrement à travers les évidements (26) ;
**caractérisé en ce que** l'élément de retenue (6) présente en outre un étrier de retenue élastique (30) qui présente au moins une première section d'enserrement (32) qui est configurée, dans l'état monté de l'élément de retenue (6), pour enserrer la tôle (24) et le support (22) au niveau d'un premier emplacement et de les serrer l'une contre l'autre.

2. Élément de retenue (6) selon la revendication 1,
dans lequel les évidements (26) sont réalisés de telle sorte qu'ils se ferment en partant du côté d'introduction (36) de manière à empêcher l'écrou (20) de passer entièrement à travers l'évidement (26).

3. Élément de retenue (10) selon la revendication 1 ou 2,
dans lequel les évidements (26) sont réalisés au moins partiellement en forme d'entonnoir.

4. Élément de retenue (6) selon l'une quelconque des revendications précédentes,
dans lequel les évidements (26) présentent chacun un chanfrein (52) pour faciliter une introduction des écrous (20) et/ou, dans le cas d'écrous (20) à bride (54), pour recevoir la bride (54).

5. Élément de retenue (6) selon l'une quelconque des revendications précédentes,
dans lequel les évidements (26) sont réalisés dans la tôle (24) comme trous borgnes.

6. Élément de retenue (6) selon l'une quelconque des revendications précédentes,
dans lequel les évidements (26) présentent au moins une section avec une section transversale hexagonale.

7. Élément de retenue (6) selon l'une quelconque des revendications précédentes,
dans lequel, sur le côté de la tôle (24) qui se trouve en vis-à-vis du côté d'introduction (36), au moins une projection (38) est formée pour bloquer un déplacement de l'étrier de retenue (30) le long de la tôle (24).

8. Élément de retenue (6) selon la revendication 7,
dans lequel la projection (38) est formée comme retroussement avec un matériau qui a été repoussé lors de la fabrication de l'évidement (26).

9. Élément de retenue (6) selon la revendication 7 ou 8,
dans lequel l'étrier de retenue (30) présente au moins un renflement (40) qui, dans l'état monté, s'engage dans la projection (38) dans une direction d'engagement (E) de telle sorte qu'un déplacement de l'étrier de retenue (30) le long de la tôle (24) est bloqué dans une direction autre que la direction d'engagement (E).

10. Élément de retenue (6) selon l'une quelconque des revendications précédentes,
dans lequel l'étrier de retenue (30) présente une seconde section d'enserrement (32) qui est configurée, dans l'état monté de l'élément de retenue (6), pour enserrer la tôle (24) et le support (22) au niveau d'un second emplacement et pour les serrer l'une contre l'autre, et
dans lequel l'étrier de retenue (30) présente une section de liaison (34) qui relie conjointement les deux sections d'enserrement (32).

11. Élément de retenue (6) selon la revendication 10,
dans lequel ledit au moins un renflement (40) est formé dans la section de liaison (34).

12. Élément de retenue (6) selon l'une quelconque des revendications précédentes,
dans lequel l'étrier de retenue (30) présente, dans l'état monté, sur les deux côtés en dehors d'une zone dans laquelle les évidements (26) sont prévus, deux renflements (40) se projetant en éloignement du côté d'introduction (36), qui incluent latéralement un second élément (12), en particulier un palier, agencé entre ceux-ci de telle sorte que l'étrier de retenue (30) est déplacé conjointement en cas de déplacement latéral de l'élément (12).

13. Élément de retenue selon l'une quelconque des revendications précédentes,
dans lequel, au niveau de la tôle (24) sur le côté où sont formées les projections (38), une projection d'encliquetage (42) est agencée, en particulier une projection en forme de nez, dans laquelle l'étrier de retenue (30) peut s'engager de manière à passer derrière la projection d'encliquetage (42) et ce faisant à être amené à reposer contre une paroi latérale (48) de la tôle (24) avec deux sections d'appui (46) pour être serré entre la projection d'encliquetage (42) et la paroi latérale (48), ou
dans lequel, au niveau de la tôle (24) sur le côté où sont formées les projections (38), une projection d'encliquetage (42) est agencée, en particulier une projection en forme de nez, dans laquelle l'étrier de retenue (30) peut s'engager de manière à passer derrière la projection d'encliquetage (42) et ce faisant à reposer contre les projections (38) pour être serré entre la projection d'encliquetage (42) et les projections (38).

14. Banc d'essai de freinage (4) comprenant
au moins un support (22) et au moins un palier (12) agencé sur le support (22) pour retenir en rotation un arbre (10) d'un rouleau (2a, 2b) du banc d'essai de freinage (4), et comprenant
plusieurs vis (18) et écrous associés (20) au moyen desquels le palier (12) est fixé sur le support (22), et comprenant
au moins un élément de retenue (6) selon l'une quelconque des revendications précédentes.
